# EUROPEAN PATENT APPLICATION

(11) **EP 4 761 209 A2**
(43) Date of publication of application: **17.06.2026**
(21) Application number: 26153142.0
(22) Date of filing: 01.09.2021
(51) Int. Cl.: H04L 43/0817

(54) **CLOUD DATA CENTER FOR PROVIDING FLEXIBLE INSTANCE AND SCHEDULING METHOD FOR FLEXIBLE INSTANCE**

(30) Priority: 01.09.2020 CN 202010906615; 31.12.2020 CN 202011636326
(62) Divisional of application: 21863624.9
(71) Applicant: Huawei Cloud Computing Technologies Co., Ltd., Guiyang, Guizhou, 550025 (CN)
(72) Inventor: GU, Jiongjiong, Shenzhen, 518129 (CN); MIN, Xiaoyong, Shenzhen, 518129 (CN); HUANG, Chaoyi, Shenzhen, 518129 (CN); CAI, Zhiyuan, Shenzhen, 518129 (CN)
(74) Representative: Pfenning, Meinig & Partner mbB

(57) **Abstract**

This application provides a cloud data center, including a resource management system and a computing resource pool. The resource management system monitors a running parameter of a flexible instance running in the computing resource pool, and indicates, according to an adjustment requirement, the computing resource pool to adjust a size of the flexible instance, where the adjustment requirement includes a QoS guarantee requirement and the running parameter of the flexible instance. The computing resource pool runs the flexible instance, collects the running parameter of the flexible instance, and adjusts, based on the indication, the size of the flexible instance, where a process of adjusting meets the QoS guarantee requirement. The cloud data center provides running of a flexible instance, improves a resource utilization of the cloud data center, reduces energy consumption, and generates environmental protection benefits.

## Description

### TECHNICAL FIELD

This application relates to the field of computers, and in particular, to a cloud data center for providing a flexible instance, a scheduling method for a flexible instance used in the cloud data center, a resource management system running in the cloud data center, and a corresponding storage medium and computer program product.

### BACKGROUND

With the emergence of public cloud technologies, a data center managed by a cloud operator gradually increases in scale. A quantity of servers in a single data center managed by one cloud operator may reach 100,000 or even 1,000,000. However, to ensure running quality of instances running on servers by tenants, a utilization of physical resources in the servers is generally limited to an interval of 10% to 20% currently.

Therefore, how to improve a utilization of these servers becomes an important issue. Improving a resource utilization of these servers cannot only reduce an equipment cost of the cloud operator, but also reduce a use cost of the tenants, reduce power consumption of the data center, and generate economic and environmental benefits.

### SUMMARY

This application provides a cloud data center that provides a flexible instance. The flexible instance is flexibly scheduled, thereby improving a resource utilization of the cloud data center.

According to a first aspect, a cloud data center is provided, where the cloud data center includes a resource management system and a computing resource pool, and the computing resource pool includes at least one host. The resource management system is configured to: monitor a running parameter of the flexible instance running in the computing resource pool, and indicate, according to an adjustment requirement, the computing resource pool to adjust a size of the flexible instance, where the adjustment requirement includes a QoS guarantee requirement and the running parameter of the flexible instance. The computing resource pool is configured to: run the flexible instance, collect the running parameter of the flexible instance, and adjust, based on the indication, the size of the flexible instance, where a process of adjusting the size of the flexible instance meets the QoS guarantee requirement.

The size of the flexible instance can be flexibly scheduled, thereby better allocating physical resources of the host, improving a resource utilization of the host, reducing power consumption of the cloud data center, and generating environmental protection benefits. In addition, scheduling of the flexible instance meets the QoS guarantee requirement, ensuring stability of a service running on the flexible instance by a tenant.

In a possible implementation, the adjustment requirement further includes specifications, the specifications include a size range of the flexible instance, and an adjusted size of the flexible instance falls within the size range. The specifications may include a maximum size and a minimum size of the flexible instance, or include a maximum size, or include a standard size and a fluctuation interval.

The specifications limit a variation interval of the size of the flexible instance, and improve stability of the flexible instance, so that the size of the flexible instance is not adjusted to an extreme, causing an economic or performance risk.

In a possible implementation, the specifications further include an instance type, and the instance type of the flexible instance is not adjusted in the process of adjusting the size of the flexible instance.

In a possible implementation, the resource management system is configured to: when the running parameter of the flexible instance indicates that a resource utilization of the flexible instance is less than a threshold, indicate the computing resource pool to reduce the size of the flexible instance.

The resource management system may indicate the deployment host of the flexible instance in the computing resource pool to reduce the size of the flexible instance, or indicate to migrate the flexible instance to a new deployment host, and the new deployment host reduces the size of the flexible instance.

In a possible implementation, the resource management system is configured to: when the running parameter of the flexible instance indicates that a QoS parameter of the flexible instance does not meet the QoS guarantee requirement, indicate the computing resource pool to enlarge the size of the flexible instance.

The QoS guarantee requirement may specify an allowable degradation ratio, and the allowable degradation ratio is a degradation ratio of a minimum QoS parameter of the flexible instance acceptable by a tenant to a QoS parameter of the flexible instance at a maximum size. The resource management system is configured to: when the running parameter of the flexible instance indicates that the QoS parameter of the flexible instance does not meet the allowable degradation ratio, indicate the computing resource pool to enlarge the size of the flexible instance.

The resource management system may indicate the deployment host of the flexible instance to enlarge the size of the flexible instance. If there are not plenty of idle resources for expansion of the flexible instance in the deployment host, the resource management system may indicate to migrate the flexible instance to a new deployment host, and the new deployment host enlarges the size of the flexible instance, or the resource management system may migrate an existing instance in an original deployment host to another host, so as to release the idle resources for expansion of the flexible instance.

In a possible implementation, the QoS guarantee requirement includes a duration requirement, and a time used in the process of adjusting the size of the flexible instance is shorter than or equal to the duration requirement.

The duration requirement limits a time required from a time when the QoS parameter of the flexible instance does not meet the QoS guarantee requirement to a time when the size of the flexible instance is expanded, which ensures stability of a service run by the tenant on the flexible instance, and avoids performance degradation of the service run by the tenant in a scheduling process of the flexible instance.

In a possible implementation, the resource management system is further configured to calculate a baseline fee of the flexible instance according to the QoS guarantee requirement, where a higher QoS guarantee requirement indicates a higher baseline fee.

In a possible implementation, the resource management system is configured to calculate a baseline fee of the flexible instance according to the duration requirement, where a smaller value of the duration requirement indicates a higher baseline fee.

A lower duration requirement represents a faster scheduling speed of the flexible instance, a faster recovery speed of a degraded QoS parameter, and a higher baseline fee.

In a possible implementation, the resource management system is configured to calculate an actual fee of the flexible instance according to the baseline fee and the size of the flexible instance.

The size of the flexible instance varies within a life cycle of the flexible instance. Therefore, a final actual fee of the flexible instance needs to be calculated based on the baseline fee and the size of the flexible instance.

In a possible implementation, the resource management system is configured to select a deployment host of the flexible instance from the at least one host according to the specifications and the QoS guarantee requirement.

When creating the flexible instance, the resource management system may select a deployment host for the newly created flexible instance according to the specifications and the QoS guarantee requirement of the flexible instance, to ensure running quality of the newly created flexible instance and remaining instances on the deployment host as much as possible.

According to a second aspect, a scheduling method for a flexible instance is provided, where the scheduling method is performed in a cloud data center, and the cloud data center includes a resource management system and a computing resource pool. The scheduling method includes: The resource management system monitors a running parameter of the flexible instance running in the computing resource pool; and the resource management system indicates, according to an adjustment requirement, the computing resource pool to adjust a size of the flexible instance, where the adjustment requirement includes a QoS guarantee requirement and the running parameter of the flexible instance, and a process of adjusting the size of the flexible instance meets the QoS guarantee requirement.

In a possible implementation, the adjustment requirement further includes specifications, the specifications include a size range of the flexible instance, and an adjusted size of the flexible instance falls within the size range.

In a possible implementation, that the resource management system indicates, according to an adjustment requirement, the computing resource pool to adjust a size of the flexible instance includes: When the running parameter of the flexible instance indicates that a resource utilization of the flexible instance is less than a threshold, the resource management system indicates the computing resource pool to reduce the size of the flexible instance.

In a possible implementation, that the resource management system indicates, according to an adjustment requirement, the computing resource pool to adjust a size of the flexible instance includes: When the running parameter of the flexible instance indicates that a QoS parameter of the flexible instance does not meet the QoS guarantee requirement, the resource management system indicates the computing resource pool to enlarge the size of the flexible instance.

In a possible implementation, the QoS guarantee requirement includes an allowable degradation ratio. That the resource management system indicates, according to an adjustment requirement, the computing resource pool to adjust a size of the flexible instance includes: When the running parameter of the flexible instance indicates that the QoS parameter of the flexible instance does not meet the allowable degradation ratio, the resource management system indicates the computing resource pool to enlarge the size of the flexible instance.

In a possible implementation, the QoS guarantee requirement includes a duration requirement. A time used in the process of adjusting the size of the flexible instance by the computing resource pool is shorter than or equal to the duration requirement.

In a possible implementation, the scheduling method further includes: The resource management system calculates a baseline fee of the flexible instance according to the QoS guarantee requirement, where a higher QoS guarantee requirement indicates a higher baseline fee.

In a possible implementation, the scheduling method further includes: The resource management system calculates the baseline fee of the flexible instance according to the duration requirement, where a smaller value of the duration requirement indicates a higher baseline fee.

In a possible implementation, the scheduling method further includes: The resource management system calculates an actual fee of the flexible instance according to the baseline fee and the size of the flexible instance.

In a possible implementation, the scheduling method further includes: The resource management system selects, according to the specifications and the QoS guarantee requirement, a deployment host of the flexible instance from at least one host included in the computing resource pool.

According to a third aspect, a resource management system is provided. The resource management system includes a monitoring module and a scheduling module. The monitoring module is configured to monitor a running parameter of a flexible instance running in a computing resource pool. The scheduling module is configured to indicate, according to an adjustment requirement, the computing resource pool to adjust a size of the flexible instance, where the adjustment requirement includes a QoS guarantee requirement and the running parameter of the flexible instance. A process of adjusting the size of the flexible instance by the computing resource pool based on the indication meets the QoS guarantee requirement.

In a possible implementation, the adjustment requirement further includes specifications, the specifications include a size range of the flexible instance, and an adjusted size of the flexible instance falls within the size range.

In a possible implementation, the scheduling module is configured to: when the running parameter of the flexible instance indicates that a resource utilization of the flexible instance is less than a threshold, indicate the computing resource pool to reduce the size of the flexible instance.

In a possible implementation, the scheduling module is configured to: when the running parameter of the flexible instance indicates that a QoS parameter of the flexible instance does not meet the QoS guarantee requirement, indicate the computing resource pool to enlarge the size of the flexible instance.

In a possible implementation, the QoS guarantee requirement includes an allowable degradation ratio. The scheduling module is configured to: when the running parameter of the flexible instance indicates that the QoS parameter of the flexible instance does not meet the allowable degradation ratio, indicate the computing resource pool to enlarge the size of the flexible instance.

In a possible implementation, the QoS guarantee requirement includes a duration requirement. A time used in the process of adjusting the size of the flexible instance by the computing resource pool is shorter than or equal to the duration requirement.

In a possible implementation, the resource management system further includes a billing module. The billing module is configured to calculate a baseline fee of the flexible instance according to the QoS guarantee requirement, where a higher QoS guarantee requirement indicates a higher baseline fee.

In a possible implementation, the billing module is configured to calculate a baseline fee of the flexible instance according to the duration requirement, where a smaller value of the duration requirement indicates a higher baseline fee.

In a possible implementation, the billing module is configured to calculate an actual fee of the flexible instance according to the baseline fee and the size of the flexible instance.

In a possible implementation, the scheduling module is configured to select, according to the specifications and the QoS guarantee requirement, a deployment host of the flexible instance from at least one host included in the computing resource pool.

In a possible implementation, the resource management system further includes a configuration module. The configuration module is configured to provide a configuration interface for the flexible instance, and receive a configuration parameter of the flexible instance by using the configuration interface for the flexible instance, where the configuration interface for the flexible instance includes a configuration area for the QoS guarantee requirement, and the configuration area for the QoS guarantee requirement is configured to receive the QoS guarantee requirement input by a tenant of the flexible instance. The configuration interface for the flexible instance improves experience of the tenant in configuring the flexible instance.

In a possible implementation, the configuration interface for the flexible instance further includes a specifications area. The specifications area is configured to receive specifications input by a tenant of the flexible instance. The specifications may be selected based on needs of the tenant, thereby improving configuration flexibility of flexible instance.

According to a fourth aspect, a computer is provided, including a memory and a processor, where the memory stores program instructions, and the processor runs the program instructions to perform the method provided in the second aspect and the possible implementations of the second aspect. Specifically, the processor runs the program instructions to run the resource management system provided in the second aspect and the possible implementations of the second aspect.

According to a fifth aspect, a readable storage medium is provided, and the readable storage medium may be a non-transitory storage medium. When the instructions stored in the readable storage medium are executed by a resource management system of a cloud data center and a host included in a computing resource pool, the cloud data center is enabled to perform the method provided in the second aspect and the possible implementations of the second aspect. The readable storage medium stores program instructions. The readable storage medium includes but is not limited to a volatile memory device, for example, a random access memory device, and a non-volatile memory device, for example, a flash memory device, a hard disk drive (hard disk drive, HDD), or a solid-state drive (solid state drive, SSD).

According to a sixth aspect, a computer program product is provided. When instructions stored in the computer program product are executed by a resource management system of a cloud data center and a host included in a computing resource pool, the cloud data center is enabled to perform the method provided in the second aspect and the possible implementations of the second aspect. The computer program product may be a software installation package. When the method provided in the second aspect and the possible implementations of the second aspect needs to be used, the computer program product may be downloaded and executed on the resource management system and the host included in the computing resource pool.

### BRIEF DESCRIPTION OF DRAWINGS

FIG. 1 is a schematic diagram of an organization structure of a cloud data center according to this application;
FIG. 2 is a schematic diagram of a configuration interface for a flexible instance according to this application;
FIG. 3 is a schematic diagram of an organization structure of a resource management system according to this application;
FIG. 4 is a schematic billing diagram of a billing module according to this application;
FIG. 5A to FIG. 5C are a schematic flowchart of scheduling a flexible instance according to this application;
FIG. 6 is a schematic diagram of an organization structure of another cloud data center according to this application; and
FIG. 7 is a schematic diagram of an organization structure of still another cloud data center according to this application.

### DESCRIPTION OF EMBODIMENTS

First, some terms in this application are described.

Host: a physical server deployed in a cloud data center. Physical resources of a host include a physical central processing unit (CPU) and a memory device. Virtualization software runs on each host. The virtualization software virtualizes some physical resources into virtual resources for use by an instance. For example, the virtualization software virtualizes a CPU into a virtual CPU (vCPU). In the following description and accompanying drawings, CPU is abbreviated as U, and vCPU is abbreviated as vU. The host further provides resources such as a memory channel, a cache channel, a cache, network input/output (input/output, I/O) bandwidth, and storage I/O bandwidth that are shared by instances running on the host.

Instance: a compute node running on a host. A common instance includes a virtual machine (virtual machine, VM) or a container (container). Each instance occupies some or all virtual resources of the host. Specifications (specifications) for an instance include an instance type (also referred to as a flavor (flavor)) and an instance size (size).

The instance type indicates a resource characteristic of the instance. For example, an economical instance uses a cheap CPU, which occupies fewer computing resources and has a lower cost. A computing-enhanced instance uses a high-performance CPU, which occupies plenty of computing resources and has a higher cost. A network-enhanced instance occupies plenty of network resources, for example, high I/O bandwidth is configured. A cost of the network-enhanced instance is higher than that of the economical instance. Different instance types represent tenant resource requirements for tenant services running on flexible instances.

The instance size indicates a quantity of resources occupied by the instance. The instance size generally includes a quantity of vCPUs and a memory size (measured in gigabyte (gigabyte, GB)), and may further include memory bandwidth, network bandwidth, and a quantity of graphics processing units (graphics processing unit, GPU), a size of a non-volatile memory device (generally a high-speed storage medium, such as a solid-state drive (solid state drive, SSD) or an NVMe SSD), or the like. In the following, only a scenario in which the instance size includes a quantity of vCPUs and a memory size (gigabyte, GB) is shown as an example. A size of the flexible instance is a quantity of resources actually occupied by the flexible instance at a certain moment or within a certain period of time. Because the size of the flexible instance fluctuates within a life cycle of the flexible instance, the size of the flexible instance mentioned in this application includes sizes of the flexible instance within different periods of time.

An instance is classified into a rigid instance and a flexible instance based on whether the virtual resources occupied change or not within its life cycle. A specification of the rigid instance remains unchanged within its life cycle. For example, a size specified when the rigid instance is created is 16 vU and 32 GB, and the size of the rigid instance remains 16 vU and 32 GB within its life cycle. A resource occupied by the rigid instance is not released until the end of its life cycle. The size of the flexible instance changes within its life cycle. For example, a size specified when the flexible instance is created is 16 vU and 32 GB (a maximum size), and the size of the flexible instance may fluctuate within its life cycle. A maximum size in a fluctuation interval is 16 vU and 32 GB, and a minimum size may be defined according to a preset rule, for example, 1 vU and 2 GB.

Resource utilization: a utilization of physical resources/virtual resources of a host/instance at a certain moment or within a certain period of time. The resource utilization of a host/instance may be calculated based on a parameter such as a CPU utilization or a memory utilization.

Quality of service (quality of service, QoS) parameter: A QoS parameter indicates a running status of an instance. A common quality of service parameter includes any one or a combination of the following: a quantity of packets per second (packet per second, PPS), a success rate of a request response, a quantity of input/output operations per second (input output operations per second, IOPS), various delays (such as a network delay and a service response delay), network bandwidth, or storage bandwidth.

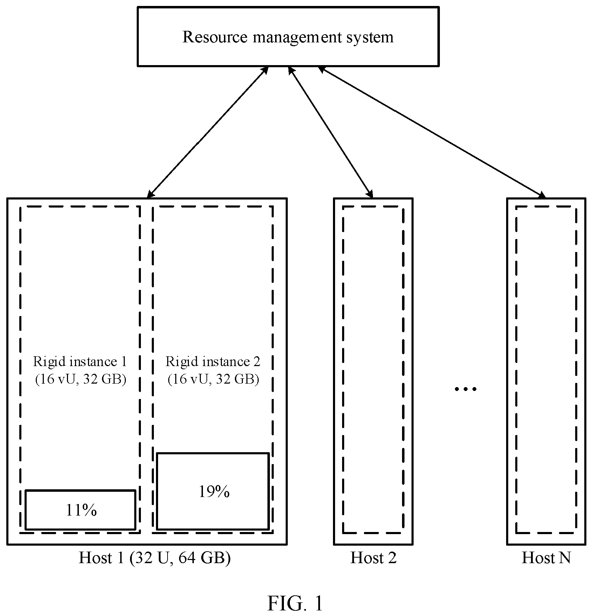

FIG. 1 provides a cloud data center, including a resource management system and a computing resource pool, where the computing resource pool includes a plurality of hosts. The computing resource pool provides resources for the resource management system for running by instances. The resource management system establishes a communication connection with each host, and monitors running parameters of each host and existing instances running on hosts. The resource management system is further responsible for scheduling instances, including provisioning new instances and migrating existing instances. When a rigid instance is scheduled, the resource management system mainly considers a resource occupancy of a host. If a quantity of unoccupied virtual resources of the host is smaller than a size of the rigid instance, the resource management system cannot provision or migrate the rigid instance to the host. Because a size of a flexible instance fluctuates, scheduling of the flexible instance is more flexible, which helps increase a resource utilization of the host.

A rigid instance 1 (16 vU, 32 GB) and a rigid instance 2 (16 vU, 32 GB) are running on a host 1 (32 U, 64 GB). A resource utilization of the rigid instance 1 (16 vU, 32 GB) is 11%, and that of the rigid instance 2 (16 vU, 32 GB) is 19%. Therefore, a resource utilization of the host 1 is about 15%. For the rigid instance, due to its fixed size, virtual resources allocated to the rigid instance cannot be allocated to another instance or used to create a new instance even if the virtual resources are not fully used by the rigid instance. Even if about 85% of virtual resources on the host 1 are not used (low resource utilization), the resource management system does not allocate a new instance on the host 1 or migrate an instance to the host 1 because all virtual resources on the host are occupied (high resource occupancy). However, when a resource utilization is relatively low, even if a size of the instance is reduced, a QoS parameter of the instance may also remain stable. In contrast, if the QoS parameter of the instance fails to meet an expectation, the size of the instance may be enlarged.

Based on this, a configuration parameter of the flexible instance is described in the following. The configuration parameter of the flexible instance includes specifications and a QoS guarantee requirement. The specifications and the QoS guarantee requirement each include one or more configuration items.

The configuration parameter of the flexible instance may be input to the resource management system by using a configuration interface for the flexible instance, or may be input to the resource management system by using a configuration instruction (for example, an application programming interface (application programming interface, API)).

The cloud data center may also preset the configuration parameter of the flexible instance, without the need for tenants to input the configuration parameter.

Instance type: A type of the flexible instance may include a general-purpose type, a compute-intensive type, a memory-intensive type, a network-intensive type, a machine learning compute-intensive type, a storage-intensive type, and the like.

Instance size: An instance size of the flexible instance indicates a size interval of the flexible instance. For example, the size interval of the flexible instance may include two configuration items: a minimum size and a maximum size, or include only one configuration item: the maximum size of the flexible instance, or include two configuration items: a standard size of the flexible instance and a fluctuation interval (an upward/downward fluctuation ratio).

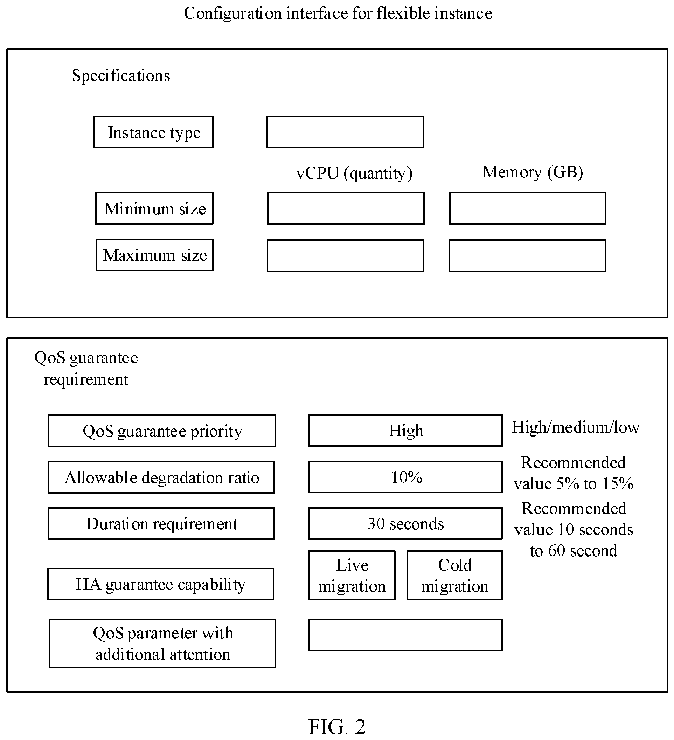

In the configuration interface for the flexible instance shown in FIG. 2, the instance size of the flexible instance includes the minimum size and the maximum size. Tenants can input a minimum quantity of vCPUs and a maximum quantity of vCPUs in a vCPU text box, or input a minimum memory size and a maximum memory size in a memory text box. Generally, the minimum quantity of vCPUs cannot be less than 1, the maximum quantity of vCPUs cannot be less than the minimum quantity of vCPUs, the minimum memory size cannot be less than 1 GB, and the maximum memory size cannot be less than the minimum memory size. A case in which the size interval of the flexible instance includes only the maximum size or includes the standard size and the fluctuation interval thereof is deduced by analogy.

QoS guarantee requirement: Because the size of the flexible instance fluctuates, tenants need to input a QoS guarantee requirement of the flexible instance. The QoS guarantee requirement indicates a requirement of the tenants for the QoS parameter of the flexible instance. The resource management system schedules the flexible instance according to the QoS guarantee requirement. As a service-level commitment of the cloud data center to the tenants, the QoS guarantee requirement reflects quality guarantee, by the cloud data center, of the QoS parameter of the flexible instance of the tenants within its life cycle, for example, degradation guarantee (an allowable degradation ratio) and recovery guarantee (a duration requirement). A process and a result of adjusting the size of the flexible instance should meet the QoS guarantee requirement. The cloud data center may preset the QoS guarantee requirement, and the tenants may also configure the QoS guarantee requirement based on their demands.

The QoS guarantee requirement includes any one or more of configuration items such as a QoS guarantee priority, the allowable degradation ratio, the duration requirement, a high availability (high availability, HA) HA guarantee capability, and a QoS parameter with additional attention. Generally, the QoS guarantee requirement at least includes the duration requirement.

QoS guarantee priority: The QoS guarantee priority may be classified into a plurality of levels, such as high/medium/low, or high/low. The resource management system schedules flexible instances with different QoS guarantee priorities in different ways. The resource management system preferentially ensures that a flexible instance with a higher priority has a lower degradation ratio of the QoS parameter and a shorter degradation duration of the QoS parameter. When the degradation ratio of the QoS parameter and the degradation duration of the QoS parameter are exceeded, the resource management system also preferentially ensures rapid recovery of the degradation ratio of the QoS parameter of the flexible instance with a higher priority. For example, the flexible instance with a higher priority is migrated to an idle host, or an instance with a lower priority on a host where the flexible instance with a higher priority is located is migrated to another host.

Optionally, when the QoS guarantee priority is low, the resource management system does not strictly manage the degradation ratio of the QoS parameter and the degradation duration of the QoS parameter of the flexible instance, and schedules a flexible instance with a low priority only when a QoS parameter degradation status (the degradation ratio and/or degradation duration) of the flexible instance with a higher priority does not exceed an allowable degradation parameter.

When the QoS guarantee requirement includes the QoS guarantee priority, the tenants may fill in the allowable degradation ratio and the duration requirement after selecting the QoS guarantee priority. Alternatively, the tenants only need to fill in the allowable degradation ratio and the duration requirement when some QoS guarantee priorities are selected. When remaining QoS guarantee priorities are selected, the tenants does not need to fill in the allowable degradation ratio and the duration requirement. For example, when the QoS guarantee priority is high or medium, the tenants need to fill in the allowable degradation ratio and the duration requirement. When the QoS guarantee priority is low, the tenants do not need to fill in the allowable degradation ratio and the duration requirement.

When the QoS guarantee requirement does not include the QoS guarantee priority or the tenants do not select any QoS guarantee priority, the tenants need to fill in the allowable degradation ratio and the duration requirement after the QoS guarantee priority is selected.

Allowable degradation ratio: a degradation ratio of a minimum QoS parameter of the flexible instance to a QoS parameter of the flexible instance at a maximum size. For example, if a maximum size of the flexible instance is 16 vU and 32 GB, and the allowable degradation ratio is 20%, an actual running QoS parameter of the flexible instance in a running process is at least 80% of the QoS parameter of the flexible instance at the maximum size.

An average value or an instantaneous value may be used to calculate the actual running QoS parameter of the flexible instance in the running process. When the average value is used for the actual running QoS parameter, it is required that a duration in which an average running QoS parameter of the flexible instance is less than the allowable degradation ratio in a cycle should not exceed the duration requirement, so that scheduling of the flexible instance is more flexible, and a resource utilization of the cloud data center is higher. When the instantaneous value is used for the actual running QoS parameter, it is required that a duration in which an instantaneous running QoS parameter is less than the allowable degradation ratio should not exceed the duration requirement multiplied by the QoS parameter at the maximum size, so that performance of the flexible instance can be better guaranteed.

Duration requirement: a duration in which a ratio of the actual running QoS parameter of the flexible instance to the QoS parameter of the flexible instance at a maximum size is allowed to be less than the allowable degradation ratio (if the allowable degradation ratio is not specified or the QoS guarantee requirement does not include the allowable degradation ratio, a value herein is 100%). To guarantee the duration in which the ratio of the actual running QoS parameter of the flexible instance to the QoS parameter of the flexible instance at the maximum size is allowed to be less than the allowable degradation ratio, a time used in a process of adjusting the size of the flexible instance should be shorter than or equal to a specified duration requirement. As described above, the actual running QoS parameter herein may be the average value or the instantaneous value. If a duration in which the actual running QoS parameter of the flexible instance is less than the degradation ratio of the flexible instance at the maximum size has exceeded or is about to exceed or is predicted to exceed the duration requirement of the flexible instance, the flexible instance may be scheduled to another host, or another instance running on the host where the flexible instance is located may be scheduled to another host.

A lower duration requirement indicates higher stability of the actual running QoS parameter of the flexible instance, and performance is better guaranteed. In contrast, a higher duration requirement indicates a higher tolerance of the tenants for a decrease in the actual running QoS parameter of the flexible instance, and scheduling of the flexible instance is more flexible.

Optionally, the allowable degradation ratio may also be replaced with a minimum degradation size, and the minimum degradation size is a lowest degradation level of the size of the flexible instance acceptable by the tenants. The minimum degradation size includes a vCPU and memory. As shown in the foregoing example, when the minimum degradation size is used, the minimum degradation size of the flexible instance may be directly defined as 12.8 vU and 25.6 GB.

Optionally, for different QoS guarantee priorities selected by the tenants, a configuration interface for the flexible instance provides one or more of a recommended default value, recommended value, and value interval of the allowable degradation ratio. For example, for a high priority, the default value is 10%, the recommended value ranges from 5% to 15%, and the value interval is from 3% to 30%. For a medium priority, the default value is 15%, the recommended value ranges from 10% to 50%, and the value interval is from 5% to 50%.

Optionally, for different QoS guarantee priorities selected by the tenants, the configuration interface for the flexible instance provides one or more of a recommended default value, recommended value, and value interval of the duration requirement. For example, for a high priority, the default value is 30 seconds, the recommended value ranges from 10 seconds to 60 seconds, and the interval is from 5 seconds to 100 seconds. For a medium priority, the default value is 60 seconds, the recommended value ranges from 30 seconds to 180 seconds, and the value interval is from 15 seconds to 300 seconds. FIG. 2 shows a default allowable degradation ratio, a default duration requirement, and a recommended value when the QoS guarantee priority is high.

HA guarantee capability: a guarantee means for a high availability requirement of the flexible instance. Generally, to ensure high availability of the flexible instance, the flexible instance needs to be migrated when an original deployment host of the flexible instance is faulty or has low performance. The HA guarantee capability may include live migration and cold migration. The live migration indicates to allow the resource management system to live migrate the flexible instance, and the cold migration indicates to allow the resource management system to cold migrate the flexible instance. When the HA guarantee capability is live migration, a migration cost of the flexible instance is higher, and a suspension time of the flexible instance caused by a migration process thereof is shorter. When the HA guarantee capability is cold migration, a migration cost of the flexible instance is lower, and a suspension time of the flexible instance caused by a migration process thereof is longer.

QoS parameter with additional attention: a quality parameter of the flexible instance that requires additional attention. Tenants can select one or more QoS parameters as the QoS parameter with additional attention to fill in. To further guarantee performance in a running process of the flexible instance and improve tenant experience, the tenants may select, based on a feature of a service running on the flexible instance, a QoS parameter of the flexible instance that requires additional attention, so that the resource management system ensures stability of the QoS parameter with additional attention as much as possible in a process of scheduling the flexible instance.

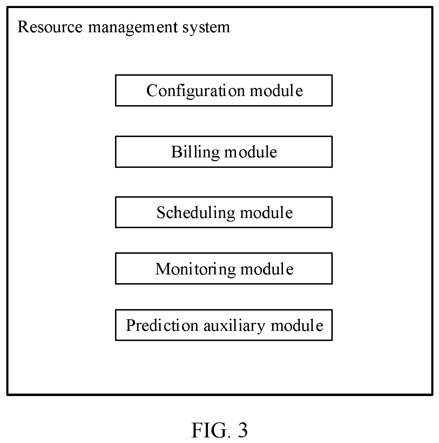

FIG. 3 describes modules included in a resource management system. The resource management system includes a configuration module, a billing module, a scheduling module, and a monitoring module, and optionally, further includes a prediction auxiliary module. The configuration module is configured to receive a configuration parameter of a flexible instance, for example, provide the configuration interface for the flexible instance in FIG. 2, or receive a configuration instruction. The billing module is configured to: calculate a baseline fee based on the configuration parameter of the flexible instance, and calculate an actual fee based on a running parameter of the flexible instance. The scheduling module is configured to schedule the flexible instance based on various types of information. The monitoring module is configured to monitor running parameters of hosts and existing flexible instances, and provide various running parameters to the scheduling module and the prediction auxiliary module. The prediction auxiliary module is configured to predict future resource utilizations of hosts, and predict a future degradation status of the QoS parameter of the flexible instance.

After the flexible instance is configured, the billing module may generate a baseline fee of the flexible instance, so that tenants can estimate a use cost of the flexible instance. The baseline fee indicates an estimated basic usage fee per unit time for the flexible instance. The unit time may be second, minute, hour, day, week, month, year, or the like.

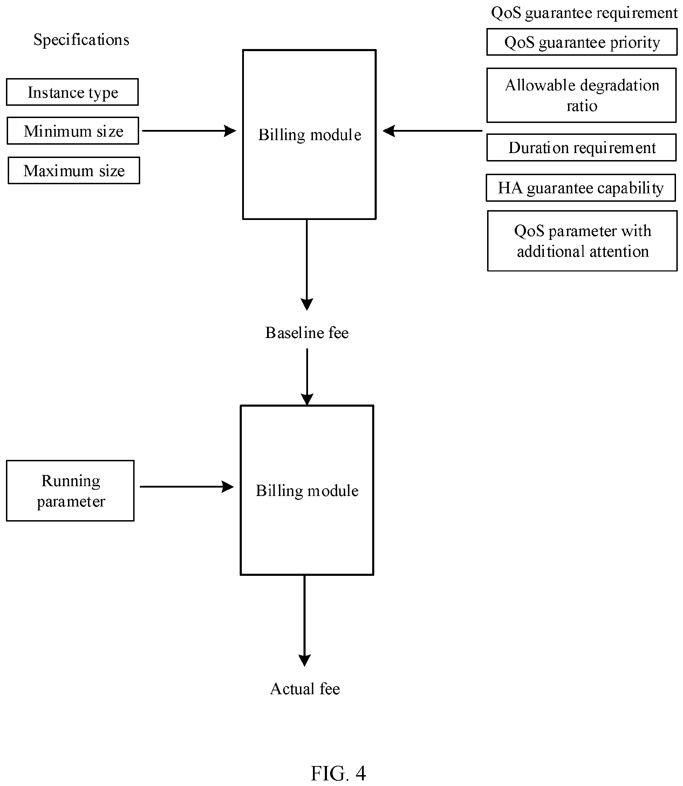

As shown in FIG. 4, the billing module calculates the baseline fee with reference to specifications and a QoS guarantee requirement. Specifically, the billing module may calculate the baseline fee by using one or more configuration items in the specifications and any one or more configuration items in the QoS guarantee requirement. When the specifications are specified, a higher QoS guarantee requirement indicates a higher baseline fee of the flexible instance, and a lower QoS guarantee requirement indicates a lower baseline fee of the flexible instance.

The following describes impact of specifications items and QoS guarantee requirement items on the baseline fee, and a configuration item is listed based on an assumption that the configuration item is included in the configuration parameter of the flexible instance.

Instance type: The baseline fee generally varies depending on the instance type.

Minimum size: Generally, a larger value of the configuration item indicates a higher QoS guarantee requirement and a higher baseline fee.

Maximum size: Generally, a larger value of the configuration item indicates a higher QoS guarantee requirement and a higher baseline fee.

QoS guarantee priority: Generally, a larger value of the configuration item indicates a higher QoS guarantee requirement and a higher baseline fee.

Allowable degradation ratio: Generally, a smaller value of the configuration item indicates a higher QoS guarantee requirement and a higher baseline fee.

Duration requirement: Generally, a smaller value of the configuration item indicates a higher QoS guarantee requirement and a higher baseline fee.

HA guarantee capability: Generally, if the QoS guarantee requirement of the flexible instance with live migration as the configuration item is higher than that of the flexible instance with cold migration as the configuration item, a baseline fee of the flexible instance with live migration as the configuration item is also higher than that of the flexible instance with cold migration as the configuration item.

QoS parameter with additional attention: Generally, the QoS guarantee requirement of the flexible instance with the configuration item filled in is higher than that of the flexible instance with the configuration item not filled in, and a baseline fee of the flexible instance with the configuration item filled in is lower than that of the flexible instance with the configuration item not filled in.

For example, the baseline fee is equal to a product of a fee calculated based on the specifications and a discount ratio calculated based on the QoS guarantee requirement. For instances of a same type, a larger minimum size and maximum size indicate a higher fee calculated based on the specifications. Configuration items in the QoS guarantee requirement affect a specific discount ratio.

As shown in FIG. 4, with actual use of the flexible instance, the billing module may generate an actual fee based on the baseline fee and an actual running size of the flexible instance.

The actual fee may include a baseline fee and at least one segment of a fluctuation fee, and each segment of the fluctuation fee includes a size of the flexible instance within a period of time and a corresponding fee. For example, if a flexible instance is created at 6:00 and a specification thereof is adjusted at 9:00, the actual fee includes:
baseline fee;
6:00 to 9:00, a size 1, a fluctuation fee 1;
9:00 to 14:00, a size 2, a fluctuation fee 2; and

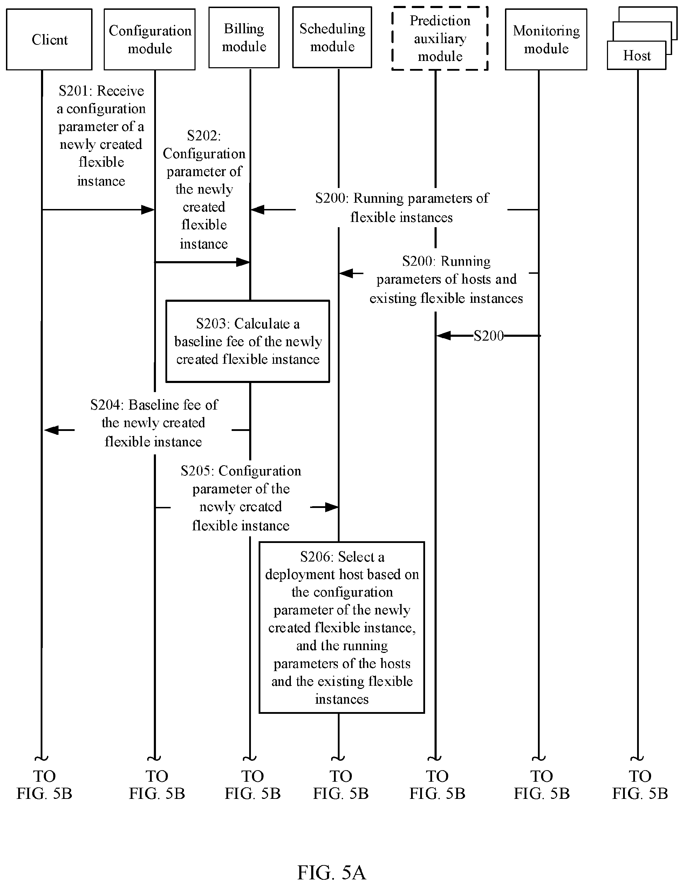

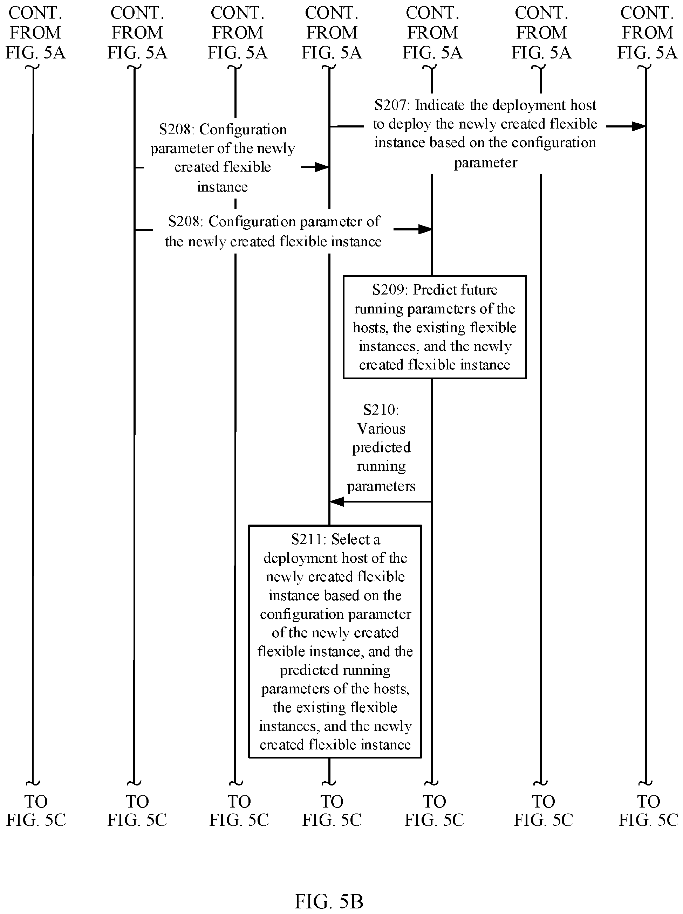

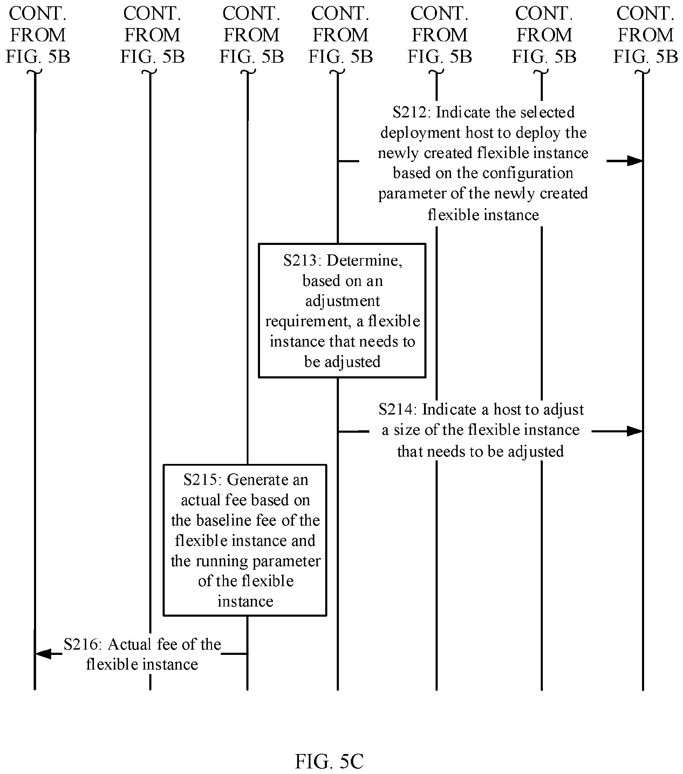

FIG. 5A to FIG. 5C show a scheduling process of a flexible instance, including the following steps.

S200: A monitoring module continuously monitors running parameters of hosts and existing flexible instances, sends the running parameters of the hosts and the existing flexible instances to a scheduling module and a prediction auxiliary module (optional), and sends the running parameters of the existing flexible instances to a billing module.

A running parameter of a host includes a resource utilization of the host, and a running parameter of the flexible instance includes one or more of a resource utilization of the flexible instance, an existing size, a degradation ratio of a QoS parameter, and a degradation duration of the QoS parameter.

Each host is installed with an agent of the monitoring module. The agent periodically collects running parameters of the host where the agent is located and the existing flexible instances running on the host where the agent is located, and reports the running parameters to the monitoring module.

S200 may be performed in parallel with other steps in the scheduling process.

S201: A client of a tenant sends a configuration parameter of a newly created flexible instance to a configuration module.

The client of the tenant may run on a local server of the tenant, or may run on a host in a cloud data center. The client of the tenant sends the configuration parameter of the newly created flexible instance to the configuration module by using a configuration instruction or a configuration interface for the flexible instance.

S202: The configuration module sends the configuration parameter of the newly created flexible instance to a billing module.

Execution of S201 and S202 is optional. The cloud data center may preset the configuration parameter of the flexible instance, without the need for the tenant to input the configuration parameter.

S203: The billing module calculates a baseline fee of the newly created flexible instance based on the configuration parameter of the newly created flexible instance.

S204: The billing module provides the baseline fee of the newly created flexible instance for the client.

The billing module may send the baseline fee of the newly created flexible instance to the configuration module, and the configuration module displays the baseline fee of the newly created flexible instance on the configuration interface for the flexible instance provided by the configuration module.

S202 to S204 are optional steps. When S202 to S204 are performed, generally, before S205 is performed, the configuration module needs to confirm a confirmation instruction after the tenant obtains the baseline fee of the newly created flexible instance, where the confirmation instruction is used to confirm that the newly created flexible instance is deployed according to the configuration parameter.

The following separately describes a scheduling procedure (S205 to S207) in which the resource management system does not include the prediction auxiliary module and a scheduling procedure (S208 to S212) in which the resource management system includes the prediction auxiliary module.

S205: The configuration module sends the configuration parameter of the newly created flexible instance to the scheduling module.

S206: The scheduling module selects a deployment host of the newly created flexible instance based on the configuration parameter of the newly created flexible instance, and the running parameters of the hosts and the existing flexible instances.

S207: The scheduling module indicates the selected deployment host to deploy the newly created flexible instance based on the configuration parameter of the newly created flexible instance.

The following describes in detail how the scheduling module selects a host to deploy the newly created flexible instance in S206.

The scheduling module selects the deployment host of the newly created flexible instance based on the following two dimensions:
1. whether the resource utilization exceeds a resource utilization threshold after the newly created flexible instance is deployed on the host; and
2. whether a degradation ratio of the QoS parameter of an existing flexible instance on the host exceeds an allowable degradation ratio of each existing flexible instance, after the host deploys the newly created flexible instance.

The scheduling module calculates, based on the resource utilization of the host and the configuration parameter of the newly created flexible instance, a resource utilization of each host after the newly created flexible instance is deployed on each host. A host whose resource utilization exceeds the threshold (for example, 50%) is removed from a list of to-be-selected hosts. If no host can be listed in the list of to-be-selected hosts, it is further determined which hosts can remain in the list of to-be-selected hosts if an existing flexible instance whose QoS guarantee priority is lower than the QoS guarantee priority of the newly created flexible instance is migrated to another host or suspended. If a to-be-selected host still cannot be found, the scheduling module may notify the client that the newly created flexible instance fails to be deployed.

In the list of to-be-selected hosts, the scheduling module calculates, based on the resource utilization of the host, the configuration parameter of the newly created flexible instance, and the degradation ratio of the QoS parameter of the existing flexible instance, a degradation status of the QoS parameter of the existing flexible instance running on each host after the newly created flexible instance is deployed on each host. A host running the existing flexible instance that is likely to exceed the allowable degradation ratio is further removed from the list of to-be-selected hosts. Subsequently, a host with the lowest resource utilization is selected from the list of to-be-selected hosts as the deployment host of the newly created flexible instance. After each host in the list of to-be-selected hosts deploys the newly created flexible instance, if a degradation ratio of a QoS parameter of at least one existing flexible instance exceeds its allowable degradation ratio, it is further determined which hosts can remain in the list of to-be-selected hosts if an existing flexible instance whose QoS guarantee priority is lower than the QoS guarantee priority of the newly created flexible instance is migrated to another host or suspended. Subsequently, a host with the lowest resource utilization is selected from the list of to-be-selected hosts as the deployment host of the newly created flexible instance.

If an existing flexible instance running on any host needs to be migrated or suspended, flexible instances on the host that need to be migrated or suspended are selected based on the following dimensions:
1. a QoS guarantee priority of the existing flexible instance, where an existing flexible instance with a lower QoS guarantee priority is preferentially migrated or suspended; and
2. a type of the existing flexible instance. To avoid a case in which the existing flexible instance and a newly created flexible instance are deployed on a same host and affect a QoS parameter of each other, it may be considered that an existing flexible instance with a same type as that of the newly created flexible instance is preferentially migrated or suspended.

According to the design, only an existing flexible instance with a low QoS guarantee priority may be specified to be suspended. For a migration manner of a flexible instance that needs to be migrated, reference may be made to its HA guarantee capability. For a process of selecting a deployment host for a migrated existing flexible instance, reference may be made to a process of selecting a deployment host for the newly created flexible instance (S206).

A scenario in which a flexible instance needs to be migrated or suspended may occur when a flexible instance is newly created, or may occur when the degradation ratio of the QoS parameter of the existing flexible instance exceeds the allowable degradation ratio, and the host has no remaining resource. In the latter case, the migrated or suspended flexible instance may also be selected based on the QoS guarantee priority of the existing flexible instance on the host and the type of the existing flexible instance on the host.

S208: The configuration module sends the configuration parameter of the newly created flexible instance to the scheduling module and the prediction auxiliary module.

S209: The prediction auxiliary module predicts future running parameters of the hosts, the existing flexible instances, and the newly created flexible instance.

The prediction auxiliary module is equipped with an intelligent module generated based on learning historical data. The intelligent module predicts future running parameters of the hosts, the existing flexible instances, and the newly created flexible instance based on the configuration parameter of the newly created flexible instance and running parameters of the hosts and the existing flexible instances that are provided by the monitoring module. A prediction time may be n future unit times, where n is an integer greater than 0.

S210: The prediction auxiliary module sends the predicted running parameters of the hosts, the existing flexible instances, and the newly created flexible instance to the scheduling module.

In S209 and S210, the prediction auxiliary module may predict the future running parameters of the hosts and the existing flexible instances in parallel with other steps.

S211: The scheduling module selects a deployment host of the newly created flexible instance based on the configuration parameter of the newly created flexible instance, and the predicted running parameters of the hosts, the existing flexible instances, and the newly created flexible instance.

S212: The scheduling module indicates the selected deployment host to deploy the newly created flexible instance based on the configuration parameter of the newly created flexible instance.

A difference between a manner in which the scheduling module selects the host for deploying the newly created flexible instance in S211 and a manner in which the scheduling module selects the host for deploying the newly created flexible instance in S206 lies in that the scheduling module may further select, by using various predicted running parameters, the host for deploying the newly created flexible instance. For example, a predicted resource utilization of each host in a future period of time after the newly created flexible instance is deployed to each host may be calculated based on predicted resource utilizations of the hosts and the configuration parameter of the newly created flexible instance, and the list of to-be-selected hosts is determined accordingly. In the list of to-be-selected hosts, the scheduling module may, based on the predicted resource utilizations of the hosts, the configuration parameter of the newly created flexible instance, and the predicted running parameters of the existing flexible instances, calculate a degradation status of the QoS parameter of the existing flexible instance running on each host in a future period of time after the newly created flexible instance is deployed to each host, and select accordingly a deployment host of the newly created flexible instance.

S213: The scheduling module determines, based on an adjustment requirement, a flexible instance that needs to be adjusted. The adjustment requirement includes a QoS guarantee requirement and a running parameter of the flexible instance.

S214: The scheduling module indicates a host in the computing resource pool to adjust a size of the flexible instance that needs to be adjusted, where a process of adjusting the size of the flexible instance meets the QoS guarantee requirement. Specifically, a time used in the process of adjusting the size of the flexible instance is shorter than or equal to a duration requirement.

The scheduling module determines, based on the running parameter of each flexible instance running in the cloud data center and the QoS guarantee requirement that are provided by the monitoring module, the flexible instance that needs to be adjusted. A flexible instance that needs to be adjusted is classified into the following types.

For a first type, when determining that the running parameter of the flexible instance indicates that a QoS parameter of the flexible instance does not meet the QoS guarantee requirement, the scheduling module indicates the computing resource pool to enlarge the size of the flexible instance. Specifically, the scheduling module determines that the degradation ratio of the QoS parameter of the flexible instance has exceeded or is about to exceed the allowable degradation ratio. In this case, the scheduling module indicates the deployment host of the flexible instance that needs to be adjusted to enlarge the size of the flexible instance that needs to be adjusted. That is, the scheduling module indicates the deployment host to allocate more resources to the flexible instance.

The indication may include an adjustment parameter, and the adjustment parameter may be determined by the scheduling module based on a size range of the flexible instance that needs to be adjusted, the degradation ratio of the QoS parameter, and the degradation duration of the QoS parameter. The deployment host enlarges, based on the adjustment parameter, a size of the flexible instance that needs to be adjusted. If there is no remaining resource that can be allocated on the deployment host, the scheduling module indicates to suspend or migrate the existing flexible instances on the deployment host, and then enlarge the size of the flexible instance or migrate the flexible instance to another host with an idle resource, and then the host to which the flexible instance is migrated enlarges the size of the flexible instance. The scheduling module adjusts, within the size range of the flexible instance that needs to be adjusted, the size of the flexible instance that needs to be adjusted. Generally, a size of a flexible instance with a larger degradation ratio of the QoS parameter and a larger degradation duration of the QoS parameter has a greater improvement.

Specifically, a time used in the process of adjusting the size of the flexible instance is shorter than or equal to the duration requirement. The time used in the process of adjusting the size of the flexible instance includes a time required for migrating existing flexible instances (possibly), a time required for migrating the flexible instance (possibly), and a time for enlarging the size of the flexible instance.

For a second type, when determining that the running parameter of the flexible instance indicates that resource utilization of the flexible instance is less than a threshold, the scheduling module indicates the computing resource pool to reduce the size of the flexible instance. In this case, the scheduling module indicates the deployment host of the flexible instance that needs to be adjusted to reduce the size of the flexible instance that needs to be adjusted. That is, the scheduling module indicates the deployment host to reduce resources allocated to the flexible instance. The indication may include the adjustment parameter, and the adjustment parameter may be determined by the scheduling module based on a size range and resource utilization of the flexible instance that needs to be adjusted. The deployment host reduces, based on the adjustment parameter, the size of the flexible instance that needs to be adjusted. The scheduling module adjusts, within the size range of the flexible instance that needs to be adjusted, the size of the flexible instance that needs to be adjusted. Generally, a lower resource utilization indicates a greater reduction in the size of the flexible instance.

S213 and S214 may be performed in parallel with other steps in the scheduling process.

S215: The billing module generates an actual fee based on the baseline fee of the flexible instance and the running parameter of the flexible instance.

S216: The billing module provides the actual fee of the flexible instance for the client.

With running of the flexible instances, if any flexible instance is actively suspended by tenants, or to guarantee that a QoS parameter of a flexible instance with a higher QoS guarantee priority is suspended by the scheduling module, the billing module generates an actual fee based on the running parameter of the flexible instance provided by the monitoring module, and provides the actual fee for the client.

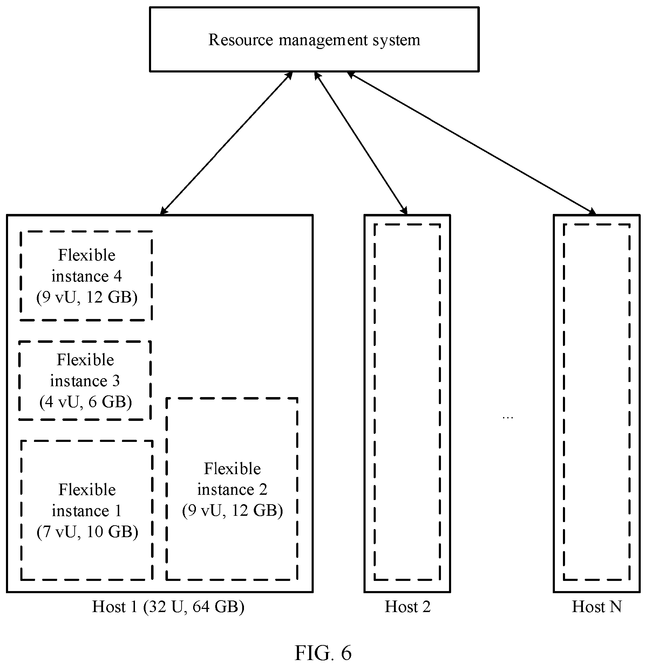

As shown in FIG. 6, when a scheduling method for the flexible instance provided in this application is used, maximum sizes of a flexible instance 1, a flexible instance 2, a flexible instance 3, and a flexible instance 4 are all the same as those of the rigid instances in FIG. 1. However, because a current load of the four flexible instances is not heavy, sizes allocated by the resource management system to the four flexible instances at a current moment are all less than a specified maximum size, so that a resource utilization of a host 1 is greatly improved. As the load of the four flexible instances increases, the resource management system may allocate more resources to each flexible instance from the host 1, or migrate some flexible instances to another host, to guarantee QoS parameters of flexible instances running on the host 1. A host resource utilization of a cloud data center provided in this application is higher, so that energy consumption in the cloud data center is reduced, and environmental protection benefits are generated.

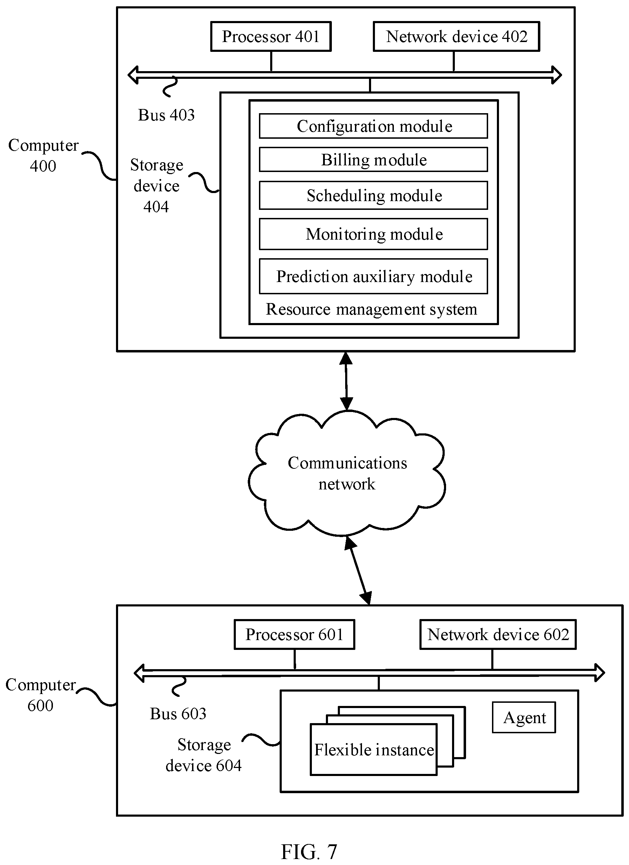

FIG. 7 provides a cloud data center, including a computer 400 and at least one computer 600. The computer 400 and the computer 600 are connected by using a communications network.

The computer 400 includes a processor 401, a network device 402, a bus 403, and a storage device 404. The processor 401, the network device 402, and the storage device 404 communicate with each other by using the bus 403. The processor 401 may be a central processing unit (central processing unit, CPU). The storage device 403 may include a volatile memory (volatile memory) device, such as a random access memory (random access memory, RAM) device, or a non-volatile memory (non-volatile memory) device, such as a read-only memory (read-only memory, ROM) device, a flash memory device, an HDD, or an SSD. The network device 402 is a network interface card.

The storage device 404 stores executable instructions, and the processor 401 executes the executable instructions to execute modules of the resource management system to run the method shown in FIG. 5A to FIG. 5C. The storage device 404 may further include executable instructions required for running an operating system (operation system, OS). The OS may be LINUX^{™}, UNIX^{™}, WINDOWS^{™} or the like.

The computer 600, namely the host, includes a processor 601, a network device 602, a bus 603, and a storage device 604. An organization structure of the computer 600 is the same as that of the computer 400. The storage device 604 stores executable instructions, and the processor 601 executes the executable instructions to execute at least one flexible instance and an agent of the monitoring module.

Embodiment 1. A cloud data center, wherein the cloud data center comprises a resource management system and a computing resource pool, and the computing resource pool comprises at least one host; the resource management system is configured to: monitor a running parameter of a flexible instance running in the computing resource pool, and indicate, according to an adjustment requirement, the computing resource pool to adjust a size of the flexible instance, wherein the adjustment requirement comprises a quality of service QoS guarantee requirement and the running parameter of the flexible instance; and the computing resource pool is configured to: run the flexible instance, collect the running parameter of the flexible instance, and adjust, based on the indication, the size of the flexible instance, wherein a process of adjusting the size of the flexible instance meets the QoS guarantee requirement.

Embodiment 2. The cloud data center according to embodiment 1, wherein the adjustment requirement further comprises specifications, the specifications comprise a size range of the flexible instance, and an adjusted size of the flexible instance falls within the size range.

Embodiment 3. The cloud data center according to embodiment 2, wherein the resource management system is configured to select a deployment host of the flexible instance from the at least one host according to the specifications and the QoS guarantee requirement.

Embodiment 4. The cloud data center according to any one of embodiments 1 to 3, wherein the resource management system is configured to: when the running parameter of the flexible instance indicates that a resource utilization of the flexible instance is less than a threshold, indicate the computing resource pool to reduce the size of the flexible instance.

Embodiment 5. The cloud data center according to any one of embodiments 1 to 4, wherein the QoS guarantee requirement comprises an allowable degradation ratio, and the resource management system is configured to: when the running parameter of the flexible instance indicates that a QoS parameter of the flexible instance does not meet the allowable degradation ratio, indicate the computing resource pool to enlarge the size of the flexible instance.

Embodiment 6. The cloud data center according to any one of embodiments 1 to 5, wherein the QoS guarantee requirement comprises a duration requirement, and a time used in a process of adjusting the size of the flexible instance is shorter than or equal to the duration requirement.

Embodiment 7. The cloud data center according to any one of embodiments 1 to 6, wherein the resource management system is further configured to calculate a baseline fee of the flexible instance according to the QoS guarantee requirement, wherein a higher QoS guarantee requirement indicates a higher baseline fee.

Embodiment 8. The cloud data center according to embodiment 7, wherein the resource management system is further configured to calculate an actual fee of the flexible instance according to the baseline fee and the size of the flexible instance.

Embodiment 9. A scheduling method for a flexible instance, wherein the scheduling method is performed in a cloud data center, the cloud data center comprises a resource management system and a computing resource pool, and the scheduling method comprises: monitoring, by the resource management system, a running parameter of the flexible instance running in the computing resource pool; and indicating, by the resource management system according to an adjustment requirement, the computing resource pool to adjust a size of the flexible instance, wherein the adjustment requirement comprises a QoS guarantee requirement and the running parameter of the flexible instance, and a process of adjusting the size of the flexible instance meets the QoS guarantee requirement.

Embodiment 10. The scheduling method according to embodiment 9, wherein the adjustment requirement further comprises specifications, the specifications comprise a size range of the flexible instance, and an adjusted size of the flexible instance falls within the size range.

Embodiment 11. The scheduling method according to embodiment 10, wherein the scheduling method further comprises: selecting, by the resource management system according to the specifications and the QoS guarantee requirement, a deployment host of the flexible instance from at least one host comprised in the computing resource pool.

Embodiment 12. The scheduling method according to any one of embodiments 9 to 11, wherein the indicating, by the resource management system according to an adjustment requirement, the computing resource pool to adjust a size of the flexible instance comprises: when the running parameter of the flexible instance indicates that a resource utilization of the flexible instance is less than a threshold, indicating, by the resource management system, the computing resource pool to reduce the size of the flexible instance.

Embodiment 13. The scheduling method according to any one of embodiments 9 to 12, wherein the QoS guarantee requirement comprises an allowable degradation ratio, and the indicating, by the resource management system according to an adjustment requirement, the computing resource pool to adjust a size of the flexible instance comprises: when the running parameter of the flexible instance indicates that a QoS parameter of the flexible instance does not meet the allowable degradation ratio, indicating, by the resource management system, the computing resource pool to enlarge the size of the flexible instance.

Embodiment 14. The scheduling method according to any one of embodiments 9 to 13, wherein the QoS guarantee requirement comprises a duration requirement; and a time used in the process of adjusting the size of the flexible instance by the computing resource pool is shorter than or equal to the duration requirement.

Embodiment 15. The scheduling method according to any one of embodiments 9 to 14, wherein the scheduling method further comprises: calculating, by the resource management system, a baseline fee of the flexible instance according to the QoS guarantee requirement, wherein a higher QoS guarantee requirement indicates a higher baseline fee.

Embodiment 16. The scheduling method according to embodiment 15, wherein the scheduling method further comprises: calculating, by the resource management system, an actual fee of the flexible instance according to the baseline fee and the size of the flexible instance.

Embodiment 17. A resource management system, comprising a monitoring module and a scheduling module, wherein the monitoring module is configured to monitor a running parameter of a flexible instance running in a computing resource pool; and the scheduling module is configured to indicate, according to an adjustment requirement, the computing resource pool to adjust a size of the flexible instance, wherein the adjustment requirement comprises a QoS guarantee requirement and the running parameter of the flexible instance, and a process of adjusting the size of the flexible instance by the computing resource pool based on the indication meets the QoS guarantee requirement.

Embodiment 18. The resource management system according to embodiment 17, wherein the adjustment requirement further comprises specifications, the specifications comprise a size range of the flexible instance, and an adjusted size of the flexible instance falls within the size range.

Embodiment 19. The resource management system according to embodiment 18, wherein the scheduling module is configured to select, according to the specifications and the QoS guarantee requirement, a deployment host of the flexible instance from at least one host comprised in the computing resource pool.

Embodiment 20. The resource management system according to any one of embodiments 17 to 19, wherein the scheduling module is configured to: when the running parameter of the flexible instance indicates that a resource utilization of the flexible instance is less than a threshold, indicate the computing resource pool to reduce the size of the flexible instance.

Embodiment 21. The resource management system according to any one of embodiments 17 to 20, wherein the QoS guarantee requirement comprises an allowable degradation ratio; and the scheduling module is configured to: when the running parameter of the flexible instance indicates that a QoS parameter of the flexible instance does not meet the allowable degradation ratio, indicate the computing resource pool to enlarge the size of the flexible instance.

Embodiment 22. The resource management system according to any one of embodiments 17 to 21, wherein the QoS guarantee requirement comprises a duration requirement; and a time used in a process of adjusting the size of the flexible instance by the computing resource pool is shorter than or equal to the duration requirement.

Embodiment 23. The resource management system according to any one of embodiments 17 to 22, wherein the resource management system further comprises a billing module; and the billing module is configured to calculate a baseline fee of the flexible instance according to the QoS guarantee requirement, wherein a higher QoS guarantee requirement indicates a higher baseline fee.

Embodiment 24. The resource management system according to embodiment 23, wherein the billing module is configured to calculate an actual fee of the flexible instance according to the baseline fee and the size of the flexible instance.

Embodiment 25. The resource management system according to any one of embodiments 17 to 24, wherein the resource management system further comprises a configuration module; and the configuration module is configured to provide a configuration interface for the flexible instance, and receive a configuration parameter of the flexible instance by using the configuration interface for the flexible instance, wherein the configuration interface for the flexible instance comprises a configuration area for the QoS guarantee requirement, and the configuration area for the QoS guarantee requirement is configured to receive the QoS guarantee requirement input by a tenant of the flexible instance.

Embodiment 26. A computer, comprising a memory and a processor, wherein the memory stores instructions, and the processor runs the instructions to perform the method according to any one of embodiments 9 to 16.

Embodiment 27. A readable storage medium, wherein when instructions stored in the readable storage medium are executed by a computer, the computer is enabled to perform the method according to any one of embodiments 9 to 16.

Embodiment 28. A computer program product, wherein when instructions in the computer program product are executed by a computer, the computer is enabled to perform the method according to any one of embodiments 9 to 16.

All or some of the foregoing embodiments may be implemented by using software, hardware, firmware, or any combination thereof. When software or firmware is used to implement embodiments, the foregoing embodiments may be implemented completely or partially in a form of a computer program product. The computer program product includes one or more computer instructions. When the computer instructions are loaded and executed on the computer, the procedures or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair) or wireless (for example, infrared, radio, or microwave) manner. The computer-readable storage medium may be any medium accessible by the computer, or a data storage device, such as a server or a data center, integrating one or more media. The medium may be a magnetic medium (for example, a floppy disk, a hard disk, or a magnetic tape), an optical medium (for example, an optical disc), a semiconductor medium (for example, an SSD), or the like.

## Claims

1. A scheduling method for a flexible instance, wherein the scheduling method is performed in a resource management system included in a cloud data center, the cloud data center further comprises a computing resource pool, and the scheduling method comprises:
obtaining, by the resource management system, a configuration parameter of a flexible instance from a tenant, the configuration parameter comprises of the flexible instance includes specifications and a QoS guarantee requirement, the specifications comprise a size range of the flexible instance;
selecting, by the resource management system based on the configuration parameter of the flexible instance, running parameters of hosts in the computing resource pool and existing flexible instances, a first deployment host of the flexible instance;
indicating, by the resource management system according to the configuration parameter of the flexible instance, the first deployment host to deploy the flexible instance;
indicating, by the resource management system according to an adjustment requirement, the computing resource pool to adjust a size of the flexible instance, wherein a process of adjusting the size of the flexible instance meets the QoS guarantee requirement, and an adjusted size of the flexible instance falls within the size range.

2. The scheduling method according to claim 1, wherein the scheduling method further comprises:
selecting, by the resource management system according to the specifications and the QoS guarantee requirement, a second deployment host of the flexible instance from at least one host comprised in the computing resource pool.

3. The scheduling method according to any one of claims 1 to 2, wherein the indicating, by the resource management system according to an adjustment requirement, the computing resource pool to adjust a size of the flexible instance comprises:
when the running parameter of the flexible instance indicates that a resource utilization of the flexible instance is less than a threshold, indicating, by the resource management system, the computing resource pool to reduce the size of the flexible instance.

4. The scheduling method according to any one of claims 1 to 3, wherein the QoS guarantee requirement comprises an allowable degradation ratio, and the indicating, by the resource management system according to an adjustment requirement, the computing resource pool to adjust a size of the flexible instance comprises:
when the running parameter of the flexible instance indicates that a QoS parameter of the flexible instance does not meet the allowable degradation ratio, indicating, by the resource management system, the computing resource pool to enlarge the size of the flexible instance.

5. The scheduling method according to any one of claims 1 to 4, wherein the QoS guarantee requirement comprises a duration requirement; and
a time used in the process of adjusting the size of the flexible instance by the computing resource pool is shorter than or equal to the duration requirement.

6. The scheduling method according to any one of claims 1 to 5, wherein the scheduling method further comprises:
calculating, by the resource management system, a baseline fee of the flexible instance according to the QoS guarantee requirement, wherein a higher QoS guarantee requirement indicates a higher baseline fee.

7. The scheduling method according to claim 6, wherein the scheduling method further comprises:
calculating, by the resource management system, an actual fee of the flexible instance according to the baseline fee and the size of the flexible instance.

8. A resource management system, comprising:
a configuration module, the configuration module is configured to obtain a configuration parameter of a flexible instance from a tenant, the configuration parameter comprises of the flexible instance includes specifications and a QoS guarantee requirement, the specifications comprise a size range of the flexible instance; and
a scheduling module, the scheduling module is configured to select a first deployment host of the flexible instance based on the configuration parameter of the flexible instance, running parameters of hosts in the computing resource pool and existing flexible instances;
the scheduling module is further configured to indicate the first deployment host to deploy the flexible instance according to the configuration parameter of the flexible instance;
the scheduling module is further configured to indicate the computing resource pool to adjust a size of the flexible instance according to an adjustment requirement, wherein a process of adjusting the size of the flexible instance meets the QoS guarantee requirement, and an adjusted size of the flexible instance falls within the size range.

9. The resource management system according to claim 8, wherein
the scheduling module is configured to select, according to the specifications and the QoS guarantee requirement, a deployment host of the flexible instance from at least one host comprised in the computing resource pool.

10. The resource management system according to any one of claims 8 to 9, wherein
the scheduling module is configured to: when the running parameter of the flexible instance indicates that a resource utilization of the flexible instance is less than a threshold, indicate the computing resource pool to reduce the size of the flexible instance.

11. The resource management system according to any one of claims 8 to 10, wherein the QoS guarantee requirement comprises an allowable degradation ratio; and
the scheduling module is configured to: when the running parameter of the flexible instance indicates that a QoS parameter of the flexible instance does not meet the allowable degradation ratio, indicate the computing resource pool to enlarge the size of the flexible instance.

12. The resource management system according to any one of claims 8 to 11, wherein the QoS guarantee requirement comprises a duration requirement; and
a time used in a process of adjusting the size of the flexible instance by the computing resource pool is shorter than or equal to the duration requirement.

13. The resource management system according to any one of claims 8 to 12, wherein the resource management system further comprises a billing module; and
the billing module is configured to calculate a baseline fee of the flexible instance according to the QoS guarantee requirement, wherein a higher QoS guarantee requirement indicates a higher baseline fee.

14. The resource management system according to claim 13, wherein
the billing module is configured to calculate an actual fee of the flexible instance according to the baseline fee and the size of the flexible instance.

15. A readable storage medium, wherein when instructions stored in the readable storage medium are executed by a computer, the computer is enabled to perform the method according to any one of claims 1 to 7.
